## Europäisches Patentamt

## European Patent Office

## Office européen des brevets

(11) Veröffentlichungsnummer: **0 061 524**
**B1**

## EUROPÄISCHE PATENTSCHRIFT

(45) Veröffentlichungstag der Patentschrift:
17.04.85

(21) Anmeldenummer: 81108930.9

(22) Anmeldetag: 26.10.81

(51) Int. Cl.⁴: **H 04 M 9/02,** H 04 L 25/49, H 04 L 5/14

(54) Verfahren zur wechselseitigen Übertragung von binären Datensignalen über eine beidseitig mit einem Übertrager abgeschlossene Signalleitung.

(30) Priorität: 31.03.81 DE 3112847

(43) Veröffentlichungstag der Anmeldung:
06.10.82 Patentblatt 82/40

(45) Bekanntmachung des Hinweises auf die Patenterteilung:
17.04.85 Patentblatt 85/16

(84) Benannte Vertragsstaaten:
AT BE GB IT NL

(56) Entgegenhaltungen:
FR - A - 2 224 958
US - A - 4 125 749
US - A - 4 170 715
US - A - 4 219 890

INTERNATIONAL CONFERENCE ON PRIVATE ELECTRONIC SWITCHING SYSTEMS, 10.-12. April 1978, Seiten 64-69, London, G.B.

(73) Patentinhaber: Siemens Aktiengesellschaft, Berlin und München Wittelsbacherplatz 2, D-8000 München 2 (DE)

(72) Erfinder: Blossfeldt, Dieter, Dipl.-Ing.,
Hirsch-Gereuthstrasse 31, D-8000 München 70 (DE)
Erfinder: Schneider, Adolf, Dipl.-Ing.,
Konrad-Celtis-Strasse 38, D-8000 München 70 (DE)

## Beschreibung

Die Erfindung betrifft ein Verfahren zur wechselseitigen Übertragung von binären Datensignalen über eine beidseitig mit einem Übertrager symmetrisch abgeschlossene und an eine Sende-/Empfangseinheit angeschaltete Signalleitung, wobei innerhalb eines, eine fest vorgegebene Anzahl von Binärzeichen aufweisenden Datenblockes eine bitweise Verschachtelung der den beiden Richtungen zugeordneten Datensignale vorgenommen wird, insbesondere für kleine Nebenstellenanlagen, in denen jeweils zwischen den Teilnehmerendgeräten und einer zentralen Einrichtung u. a. zur Übermittlung der dem Verbindungsaufbau dienenden und vom Teilnehmer eingegebenen Wahlinformationen bzw. Informationen über Leitungsbelegungen und zur Übermittlung von am Teilnehmerendgerät optisch und/oder akustisch durch entsprechend gesteuerte Anzeigeelemente registrierbare, bestimmte Zustände der Gesprächsverbindung und die Anlage betreffende Informationen eine Signalübertragung über eine hierfür vorgesehene und aus den jeweiligen Sprechadern und den Signaladern gebildete Anschlußleitung stattfindet, wobei in der einen Übertragungseinrichtung zur Kennzeichnung der beiden Binärwerte Impulse gleicher Polarität angewendet werden.

Zwischen den einzelnen Endeinrichtungen und einer ihnen gemeinsamen Einrichtung findet voraussetzungsgemäß eine wechselseitig gerichtete Signalisierung statt. Diese Endeinrichtungen können beispielsweise die einzelnen Sprechapparate der Teilnehmerstellen einer kleinen Nebenstellenanlage sein. Zu ihnen können von der zentralen Einrichtung Einstellinformationen für an ihnen angebrachte Anzeigeelemente übertragen werden. Sind diese Anzeigeelemente optischer Art, so können sie durch sogenannte Leuchtdioden und/oder durch eine Display-Anzeige gebildet sein. An einem Sprechapparat kann über eine derartige Anzeige ein Teilnehmer beispielsweise über die von ihm eingewählte Rufnummer oder über aufgelaufene Gesprächsgebühren informiert werden. Durch den aufgrund der übertragenen Signale einstellbaren Leuchtzustand der vorhandenen optischen Anzeigeelemente kann einem Teilnehmer angezeigt werden, ob beispielsweise die für die Anlage vorgesehenen Externleitungen bzw. die Internleitungen frei oder belegt sind. Weiterhin können Informationen übermittelt werden, die die Abgabe von akustischen Signalen an der jeweiligen Teilnehmerstelle betreffen. Je nachdem, ob es sich um den Verbindungswunsch eines internen oder eines externen Teilnehmers handelt, könnten beispielsweise unterschiedliche Rufsignale ausgelöst werden. Auf diese Weise wäre es möglich, die Ursprungsart der gewünschten Gesprächsverbindung festzustellen.

Stellen die Endeinrichtungen Fernsprechapparate dar, so werden in erster Linie Informationen über den Schaltzustand bestimmter Schaltelemente zu der zentralen Einrichtung übertragen. Diese als Tasten ausgebildeten Schaltelemente stellen beispielsweise Wahltasten dar. Es können noch weitere Tasten vorgesehen sein, die bestimmte Bedienungsprozeduren ermöglichen bzw. durch deren Betätigung die Art der beabsichtigten Verbindung signalisiert werden kann. Es kann dadurch in der zentralen Einrichtung unterschieden werden, ob eine interne Verbindung zu einem anderen Sprechapparat der jeweiligen Nebenstellenanlage oder ob eine externe Verbindung zu einem Sprechapparat des öffentlichen Netzes bzw. zu einem Sprechapparat einer anderen Nebenstellenanlage hergestellt werden soll.

Die bitweise Verschachtelung der wechselseitig den beiden Richtungen zuzuordnenden Informationsbits innerhalb eines Datenblockes erfordert eine genaue zeitliche Abstimmung der jeweiligen Sendezeitpunkte. Hierzu muß der Takt, der in der jeweiligen Endeinrichtung der Aussendung der Informationsbits zugrunde liegt, auf den Takt, der in der zentralen Einrichtung die Aussendung der Informationsbits festlegt, abgestimmt sein. Dies setzt eine gegenseitige Synchronisation der jeweiligen Oszillatoren, von denen der Takt abgeleitet wird, voraus.

Durch die Druckschrift »International Conference on private electronic switching systems« 10—12, April 1978, Seiten 64—69, London, ist ein eingangs genanntes System zur wechselseitigen Übertragung von Binärdaten für Nebenstellenanlagen bekannt. Weiterhin ist es bekannt, daß in einer Übertragungsrichtung zur Kennzeichnung der beiden Binärwerte Impulse gleicher Polarität verwendet werden.

Es ist Aufgabe der Erfindung, bei einem Verfahren zur wechselseitigen Übertragung von binären Datensignalen diese Synchronisation bei geringstmöglichem Aufwand für die vorhandenen Oszillatoren zu ermöglichen und gleichzeitig eine hohe Auswertesicherheit zu gewährleisten.

Dies wird für ein Verfahren der eingangs genannten Art dadurch erreicht, daß die Impulse sich sowohl in ihrer Zeitdauer als auch in ihrer Impulsamplitude in der Weise unterscheiden, daß der Impuls mit der geringeren Zeitdauer eine höhere Amplitude als der Impuls mit der längeren Zeitdauer aufweist, wobei das Produkt aus Impulsdauer (T/2, T) und der betreffenden Amplitude für beide Impulsarten annähernd den gleichen Wert aufweist, daß weiterhin zumindest die zwischen den Impulsanfängen vorgegebene Zeitdauer (BZ) als Pausenzeit zwischen den Datenblöcken festgelegt ist, daß in der anderen Übertragungseinrichtung zur Darstellung der Binärwerte Impulse mit einer solchen Form und Amplitude gewählt sind, daß bei ihrem Einfügen die durch das Ausschwingverhalten der Leitung bestimmten Potentialverhältnisse etwa denjenigen entsprechen, die sich bei zwei unbeeinflußt aufeinanderfolgenden Impulsen der erstgenannten Art einstellen.

Gemäß einer Ausbildung der Erfindung können die Verhältnisse, die sich aufgrund der in der einen Richtung ausgesendeten Impulse ergeben, beim Senden in der Gegenrichtung unverändert beibehalten werden, wenn zur Darstellung des einen Binärwertes ein bipolarer Impuls geeigneter Abmessung und für die Darstellung des anderen Binärwertes ein dem Ruhepotential der Leitung entsprechender impulsloser Zustand verwendet wird. Eine Verwendung derartiger binärer Impulse ist durch die US-A-4 125 749 bekannt.

Beim Senden von Impulsen auf einer durch Übertrager abgeriegelten Leitung treten am Ende der Impulse Überschwinger über das Ruhepotential der Leitung auf. Bei einer sinnvollen Ausnützung der Übertragungsleitung wird der nachfolgende Impuls bereits ausgesendet, bevor das Ruhepotential wieder erreicht ist. Daduch bleibt für den nachfolgenden Impuls eine Niveauverschiebung bestehen. Da diese u. a. von der Zeitdauer der Impulse abhängig ist, würden sich also bei binär-impulsmodulierten Impulsen unterschiedliche Niveauverschiebungen einstellen. Bei einer fest vorgegebenen Auswerteschwelle der Empfangsschaltung besteht dadurch bei ener Übertragungsleitung von einigen Kilometern Länge die Gefahr einer fehlerhaften Auswertung. Dies wird durch die erfindungsgemäße Erhöhung der Amplitude des schmalen Sendeimpulses gegenüber derjenigen des breiteren Sendeimpulses verhindert. Diese spezielle Dimensionierung betrifft die Impulse der einen Richtung, beispielsweise der Vorwärtsrichtung. Um zu vermeiden, daß bei der bitweisen Verschachtelung die Binärzeichen in der Rückwärtsrichtung zusätzlich Niveauschwankungen verursachen, wird erfindungsgemäß als aktives Binärzeichen ein speziell ausgebildeter Impuls verwendet. Dieser Impuls, der zwischen zwei aufeinanderfolgenden und den Bitrahmen festlegenden Impulsen der Vorwärtsrichtung eingefügt ist, stellt vorzugsweise einen derart geformten bipolaren Impuls dar, daß die Leitung am Ende des Bitrahmens dasselbe Profil aufweist, das sie auch aufweisen würde, wenn kein derartiger Impuls eingeblendet worden wäre. Es wird also eine nachteilige zusätzliche Niveauverschiebung verhindert. Daraus ergibt sich, daß die Empfangsschaltung für die Impulse der Vorwärtsrichtung eine hohe Auswerteschwelle aufweisen kann. Dadurch wird die Sicherheit gegenüber Störungen erhöht. Da in der einen Richtung für jeden Binärwert ein Impuls übertragen wird, kann über eine auswertende Steuereinheit mit jedem dieser empfangsseitig einwandfrei zu registrierenden Impulse ein Synchronisationsimpuls für eine taktgebende Einheit abgeleitet werden. Es kann durch die Auswertung der zwischen den Datenblöcken vorgesehenen Pause, die beispielsweise der für den Bitrahmen vorgesehenen Zeitdauer entspricht, in einfacher Weise der Beginn eines Datenblockes erkannt werden. Durch die Auswertung der Pause können sich Störimpulse nicht nachteilig auswirken. Gleichzeitig kann dadurch ein weiterer Synchronisationsimpuls zur Synchronisierung der Steuerungsabläufe in der zentralen Einrichtung und in den Teilnehmerendgeräten gewonnen werden. Die erfindungsgemäße Lösung für eine Datenübertragung unterscheidet sich demnach in mehrfacher Hinsicht von einem bekannten Übertragungsverfahren, bei dem zur Kompensation von Impulsverzerrungen eine derartige Verkürzung der Amplitude der Rückflanke des jeweiligen Einzelimpulses bewirkt wird, daß der nachfolgende Impuls nicht mehr in unerwünschter Weise beeinflußt wird. Dies ist auch in den Fällen möglich, bei denen zwischen den einzelnen Impulsen derselben Richtung ein zusätzlicher, der anderen Richtung zuzuordnender Impuls eingefügt wird (DE-AS 27 42 301).

Gemäß einer weiteren Ausgestaltung der Erfindung werden für diejenige Richtung, in der ein wesentlich höherer Informationsfluß als in der dazu entgegengesetzten Richtung vorliegt, als Binärzeichen die unipolaren Impulse gewählt. Beim Einsatz des Übertragungsverfahrens in Fernsprech-Nebenstellenanlagen ist dies für die von der zentralen Einrichtung zu den einzelnen Endgeräten zu übertragenden Informationen der Fall.

Die Erfindung wird durch die in der Zeichnung dargestellten Ausführungsbeispiele näher erläutert.

Die Fig. 1 zeigt auszugsweise eine kleine Nebenstellenanlage, bei der die Sprechstellen an eine ihnen gemeinsame Einrichtung angeschaltet sind und bei der zur wechselseitigen Übertragung von Informationen das erfindungsgemäße Verfahren anwendbar ist.

Die Fig. 2 zeigt ein die verwendeten Binärwerte darstellendes Impulsdiagramm.

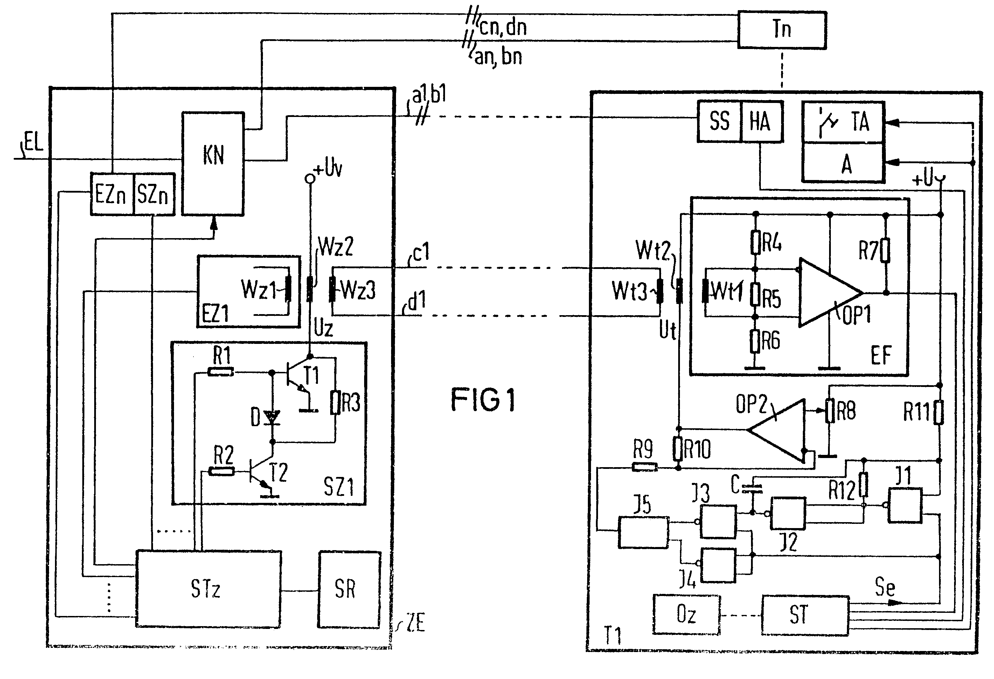

In dem modifizierten Blockschaltbild nach der Fig. 1 ist auszugsweise eine kleine Nebenstellenanlage dargestellt, bei der eine geringe Anzahl von Sprechstellen T1 bis Tn sternförmig jeweils über eine mehradrige Anschlußleitung mit der ihnen gemeinsamen Steuer- und Vermittlungsfunktionen erfüllenden Einheit ZE verbunden ist. Jede Teilnehmeranschlußleitung besteht zumindest aus einem Sprechadernpaar a, b und einem Signalisierungsadernpaar c, d. Außer dem zu der Sprechstelle T1 führenden Signalisierungsadernpaar c1, d1 sind alle übrigen Adernpaare vereinfacht einadrig dargestellt. Für den Fall, daß die Funktionseinheiten der einzelnen Sprechstellen nicht durch ein örtlich unmittelbar zuzuordnendes Gerät, z. B. ein Steckernetzgerät, gleichstrommäßig versorgt werden können, kann diese Versorgung auch aus der zentralen Einheit ZE über ein weiteres nicht dargestelltes Adernpaar vorgenommen werden. An die zu jeder Sprechstelle führenden Sprechadern, z. B. Sprechadern a1 und b1, ist wie dies für die Sprechstelle T1 angedeutet ist, eine Sprechschaltung SS angeschlossen. Sie dient in Verbindung mit dem Handapparat HA der Verarbeitung der übertragenen Sprachinformation und bildet den Leitungsabschluß. Zwischen den einzelnen Sprechapparaten T sind interne Verbindungen herstellbar, und es besteht außerdem die Möglichkeit, sich auf eine von mehreren externen Leitungen EL aufzuschalten. Diese können zu einer Vermittlungsstelle des öffentlichen Fernsprechnetzes oder zu einer anderen Nebenstellenanlage führen. Durch die Einheit TA soll die Möglichkeit angedeutet werden, daß durch die Betätigung von Tasten das Aussenden bestimmter Informationen veranlaßt werden kann. Neben der normalen Wahltastatur können weitere Tasten vorhanden sein, durch deren Betätigung bestimmte Bedienungsprozeduren einzuleiten sind. Die jeweilige Tastenbetätigung wird von einer in jedem Fernsprechapparat vorhandenen Steuereinheit ST registriert. Durch diese Steuereinheit, die durch einen Prozessor gebildet sein kann, wird dann durch Beeinflussung einer entsprechenden Sendeanordnung die Übermittlung der betreffenden Informationen an die zentrale Einheit ZE veranlaßt. Die durch binäre Datensignale vorgenommene Signalisierung erfolgt über die beidseitig mit einem Übertrager Ut bzw. Uz abgeschlossenen Signalisierungsadern c1, d1 dadurch, daß die Sendewicklung Wt2 entsprechend dem jeweils zuzuordnenden Bitmuster wirksam geschaltet wird. In der zentralen Einheit werden die übermittelten Informationen von einer individuell für jeden Sprechapparat vorhandenen Empfangsschaltung EZ registriert und einer Steuereinheit STz zur Auswertung zugeleitet. Dem Sprechapparat T1 ist demnach in der zentralen Einheit die Empfangsschaltung EZ1 zugeordnet.

Die Steuereinheit STz liefert auch die für die Herstellung einer Sprechverbindung notwendigen Einstell- und Durchschaltebefehle für die in der vorhandenen Koppelanordnung KN enthaltenen Koppelkontakte. Außerdem steuert sie eine Sendeeinheit SZ, durch die Informationen zu den einzelnen Sprechapparaten ausgesendet werden. Für den Sprechapparat T1 ist die Sendeschaltung SZ1 maßgebend, die über die Sendewicklung des zugeordneten Übertragers Uz mit den Signalisierungsadern der zum Fernsprechapparat T1 führenden Anschlußleitung gekoppelt ist.

Die von der zentralen Einheit zu den einzelnen Sprechapparaten übermittelten Informationen betreffen beispielsweise Einstellinformationen für optische Anzeigeelemente A, die am jeweiligen Sprechapparat angebracht sind. Durch sie kann beispielsweise der Belegtzustand der einzelnen Intern- bzw. Externleitungen angezeigt werden. Die übermittelten Informationen werden durch die Empfangseinheit EF registriert und der Steuereinheit ST zugeführt. Diese veranlaßt dann die dem Informationsinhalt entsprechende Ansteuerung der optischen Anzeigeelemente. Es könnten auch akustische Signalgeber, die eine Unterscheidung bestimmter Betriebsweisen ermöglichen, aufgrund von diesbezüglich übermittelten Informationen angesteuert werden.

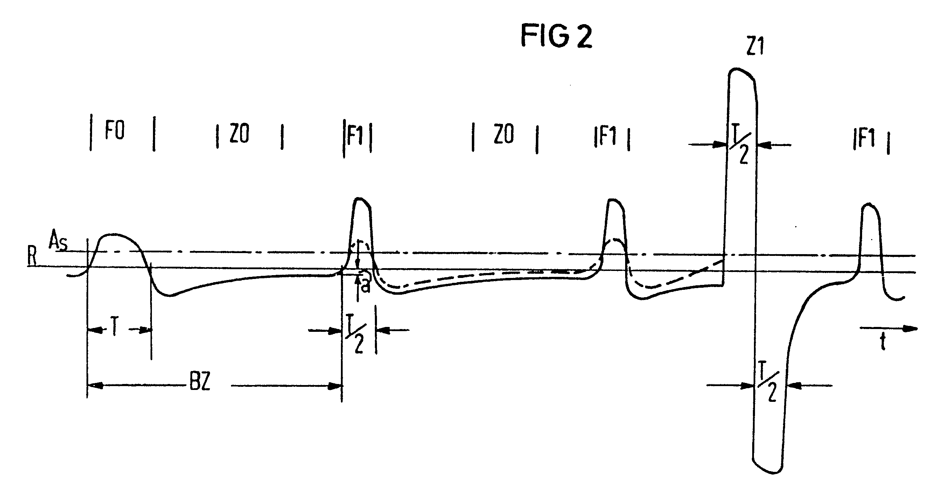

Während von den einzelnen Sprechapparaten nur bei einer vorgenommenen Tastenbetätigung bzw. bei Abheben des Handapparates eine aktive Signalisierung zu der zentralen Einrichtung vorgenommen wird, findet in der Gegenrichtung, also von der zentralen Einheit ZE zu den einzelnen Sprechapparaten T eine Signalisierung mit sich häufiger ändernden Informationsinhalten statt. Als Binärzeichen werden zur Übertragung der jeweiligen Informationen von der zentralen Einheit über eine Sendeeinheit SZ unipolare Impulse ausgesendet, die zur Unterscheidung der beiden Binärwerte unterschiedliche Impulsbreiten und Impulsamplituden aufweisen. Dies ist dem Impulsdiagramm nach der Fig. 2, das für die weitere Betrachtung mit herangezogen wird, entnehmbar. Das beispielsweise von der Sendeeinheit SZ1 zu dem Sprechapparat T1 ausgesendete Sendebit F0 mit der Zeitdauer T kann dem Binärwert 0 und das Sendebit F1 mit der Zeitdauer T/2 dem Binärwert 1 entsprechen. In Abhängigkeit von der jeweils zu übertragenden Information wird die Reihenfolge der Binärwerte innerhalb eines zu bildenden Informationsblocks durch die Steuereinheit STz festgelegt und aufgrund des damit vorgegebenen Bitmusters die beiden Transistoren T1 bzw. T2 der in den Einzelheiten dargestellten Sendeeinheit SZ1 angesteuert. Wird z. B. während der Zeitdauer T/2 über den Basisvorwiderstand R1 Aufsteuerpotential für den Transistor T1 angelegt, so wird die Sendewicklung Wz2 des Übertragers Uz während der Durchsteuerzeit vom Strom durchflossen. Dadurch wird in der leitungsseitigen Wicklung Wz3 ein Impuls von der Breite T/2 induziert. Wird von der Steuereinheit STz über den Basiswiderstand R2 während einer Zeitdauer T Aufsteuerpotential für den Transistor T2 angelegt, so ist während dieser Zeit die Sendewicklung über den Vorwiderstand R3 an die Versorgungsspannung angeschaltet, während über die Diode D der Transistor T1 gesperrt ist. Es wird in der leitungsseitigen Wicklung Wz3 ein Impuls von der Breite T induziert, der gegenüber dem erstgenannten Impuls eine geringere Amplitude aufweist. Sendeseitig werden die Amplituden für die erzeugten Impulse so bestimmt, daß für beide Impulsarten das Produkt aus Impulsdauer und der betreffenden Amplitude angenähert den gleichen Wert ergibt. In der Darstellung der Fig. 2 ist hinsichtlich dieser die Informationsbits F0 und F1 bildenden Impulse berücksichtigt, daß die ursprünglich angenähert rechteckförmigen Impulse im Verlauf der Übertragung aufgrund der Leitungseigenschaften eine Veränderung erfahren. Die in der Fig. 2 gezeigten diesbezüglichen Impulse könnten den Spannungsverlauf der Leitung an der Empfangsseite nach einigen Kilometern Leitungslänge darstellen. Am Ende eines jeden dem Informationsbit F0 bzw. F1 entsprechenden Impulses tritt ein Überschwingen über das Ruhepotential R der jeweiligen Übertragungsleitung auf. Es erfolgt dann eine asymtotische Annäherung an das Ruhepotential. In der Regel ist eine derartige Impulsdichte erforderlich, daß dieses Ruhepotential bis zum Aussenden des für dieselbe Übertragungsrichtung unmittelbar nachfolgenden Impulses nicht mehr erreicht wird. Es bleibt somit eine geringfügige Niveauverschiebung a bestehen. Würde man für die den Binärwert 1 repräsentierenden Informationsbits F1 die gleiche Amplitude vorsehen, wie für die den Binärwert 0 repräsentierenden Informationsbits F0, so würde sich bei einer Folge von F1-Informationsbits der Abstand zwischen dem Anfangspotential der steigenden Impulsflanke und dem vorhandenen Ruhepotential von Impuls zu Impuls vergrößern. Damit wäre eine empfangsseitige Auswertung ab einer bestimmten Leitungslänge erschwert bzw. nicht mehr möglich, wenn für die Auswertung eine Ansprechschwelle mit einem festen Abstand vom Ruhepotential vorgesehen ist. Diese nachteilige Verschiebung des Anfangspotentials, die für die dem Informationsbit F0 nachfolgenden beiden Informationsbits F1 durch eine gestrichelte Linie im Diagramm nach der Fig. 2 veranschaulicht ist, wird durch die Wahl von unterschiedlichen Amplituden für die beiden Impulsarten ausgeschlossen.

Die in jedem Fernsprechapparat T vorhandene Empfangsschaltung, beispielsweise die Empfangsschaltung EF für den Sprechapparat T1, besteht im wesentlichen aus der Empfangswicklung Wt1 und dem mit den Widerständen R4 bis R7 als Komparator beschalteten Operationsverstärker OP1. Durch die aus den Widerständen R4 bis R6 gebildete Teilerschaltung wird eine feste Ansprechschwelle für den Operationsverstärker vorgegeben. Jeder Empfangsimpuls eines Bitzyklus BZ führt zu einer Änderung im Ausgangssignal des Operationsverstärkers, das von der Steuereinheit ST registriert wird. Dadurch werden die im übertragenen Bitmuster innerhalb eines gebildeten Datenblocks enthaltenen Informationen erkannt und die entsprechenden Folgefunktionen veranlaßt. Diese bestehen beispielsweise in einer entsprechenden Ansteuerung der in der Anzeigeeinheit A enthaltenen Anzeigeelemente.

Da von der zentralen Einheit ZE zu den einzelnen Fernsprechapparaten für jeden Binärwert ein aktiver Impuls übertragen wird, kann in jedem Bitzyklus BZ ein Synchronisationsimpuls für die in jedem Fernsprechapparat vorhandene taktgebende Einheit Oz abgeleitet werden. Diese Einheit liefert über entsprechend eingeschaltete Teilerstufen die für die Steuerungsabläufe notwendigen Taktfolgen. Es kann somit ein kostengünstiger Oszillator mit geringerer Frequenzkonstanz verwendet werden. Es ist vorausgesetzt, daß die bei der wechselseitigen Signalisierung von den einzelnen Sprechapparaten abgegebenen Informationsbits innerhalb enes gebildeten Datenblockes bitweise mit den von der zentralen Einheit ZE ausgesendeten Informationsbits verschachtelt sind. Hierzu ist eine genaue zeitliche Abstimmung der jeweiligen Sendezeitpunkte erforderlich, die durch die Ableitung der genannten Synchronisierimpulse möglich ist. Durch die zwischen den Datenblöcken jeweils eingefügte Pause kann das Ende eines jeden Datenblockes erkannt werden.

In der Richtung vom jeweiligen Fernsprechapparat zu der zentralen Einrichtung wird zur Darstellung des Binärwertes 1 ein bipolarer Impuls Z1 und für die Darstellung des Binärwertes 0 der impulslose Zustand verwendet. Das durch den letzteren definierte Informationsbit Z0 wird durch die zeitliche richige Auswertung in der Zentrale als solches erkannt. Der im Diagramm der Fig. 2 gezeigte bipolare Impuls hat gegenüber den ankommenden Impulsen eine wesentlich höhere Amplitude, da — wie bereits erwähnt — die Spannungsverhältnisse der Leitung unmittelbar am Fernsprechapparat dargestellt sind. Der bipolare Impuls wird hinsichtlich seiner Abmessungen so bestimmt, daß er zeitrichtig zwischen zwei ankommende Impulse einzufügen ist, ohne daß die Potentialverhältnisse an der ansteigenden Flanke des ihm zeitlich nachgeordneten empfangenen Impulses gegenüber den Verhältnissen, die bei zwei unbeeinflußt aufeinanderfolgenden derartigen Impulsen entstehen, verändert werden.

Zum Zeitpunkt der Aussendung des bipolaren Impulses wird von der Steuereinheit ST am Ausgang Se ein Steuersignal abgegeben, das beispielsweise die Zeitdauer T hat. Durch den aus den NOR-Gattern I1 und I2 sowie dem Widerstand R12 und dem Kondensator C gebildeten Multivibrator wird, ausgelöst durch den Ansteuerimpuls, ein Impuls von der Zeitdauer T/2 erzeugt. In der Zeit, in der der Eingangssteuerimpuls am Ausgang Se anliegt, wird über den Inverter I4 der elektronische Schalter I5, der sich zu den Zeiten, in denen keine Aussendung vorgenommen wird, im hochohmigen Zustand befindet, niederohmig geschaltet. Gleichzeitig wird das NOR-Glied I3 entsperrt, so daß der durch den Multivibrator erzeugte Impuls am Ausgang des Schalters I5 und damit auch über den Widerstand R9 am invertierenden Eingang des Operationsverstärkers OP2 anliegt. Über den einstellbaren Widerstand R5 ist als Ausgangszustand der Ausgang des Operationsverstärkers auf das Potential U/2 eingestellt, so daß die Sendewicklung Wt2 des Übertragers Ut zwischen den Potentialen U und U/2 liegt. Während der Zeitdauer des durch den Multivibrator erzeugten Impulses wird der Ausgang des Operationsverstärkers auf ungefähr 0 Volt und während der Restzeitdauer des durch die Steuereinheit ST angelegten Ansteuerimpulses auf das Versorgungsspannungspotential U geschaltet. Mit dem Ende des Ansteuerimpulses, d. h. nach der Zeitdauer T, wird der Multivibrator und der Schalter I5 gesperrt, so daß der Ausgang des Operationsverstärkers wieder das Ausgangspotential U/2 annimmt. Es wird also über den Operationsverstärker zunächst das Potential an der mit ihm verbundenen Seite der Sendewicklung Wt2 von dem Wert U/2 auf den Wert 0 abgesenkt. Durch den dadurch verursachten Anstieg des Stromes wird in der leitungsseitigen Wicklung Wt3 ein positiv gerichteter Impuls von der Zeitdauer T/2 induziert.

Unmittelbar daran anschließend wird bedingt durch das Anheben des Potentials vom Wert 0 auf den Wert U eine Stromabsenkung in der Sendewicklung vorgenommen. Dadurch wird in der leitungsseitigen Wicklung Wt3 ein negativ gerichteter Impuls von der Zeitdauer T/2 induziert. Auf der Leitung wird somit zu dem von der Steuereinheit ST bestimmten Zeitpunkt aufgrund des auszusendenen Bitmusters ein bipolarer Impuls Z1 mit der Gesamtzeitdauer ausgesendet. Dieser wird von der in der zentralen Einheit ZE vorhandenen und über einen Übertrager Uz mit der jeweiligen Signalleitung gekoppelten Empfangsschaltung EZ registriert. Für die den Signaladern c1, d1 zugeordnete Empfangsschaltung EZ1 ist lediglich die empfangsseitige Wicklung Wz1 des Übertragers dargestellt. Die empfangenen Informationsbits werden durch die Steuereinheit STz ausgewertet, die dann auch die entsprechenden Folgefunktionen veranlaßt. Die von den Sprechapparaten übermittelten Informationen, die also in erster Linie Aussagen über die Betätigung bestimmter Tasten enthalten, können beispielsweise in der Speichereinrichtung SR abgespeichert werden, die weiterhin Informationen über einzelne Steuerungsabläufe und Verbindungszustände enthalten kann.

Der von einem Fernsprechapparat als aktives Binärzeichen ausgesendete bipolare Impuls wird bei der Anordnung des Ausführungsbeispieles auch von der Empfangswicklung Wt1 registriert und über den Komparator (Op1, R4—R7) an die auswertende Steuereinheit übergeben. Da diese Steuereinheit den Sendezeitpunkt bestimmt, kann dadurch sichergestellt werden, daß die betreffende Ausgangsinformation des Komparators nicht gewertet wird.

**Patentansprüche**

1. Verfahren zur wechselseitigen Übertragung von binären Datensignalen über eine beidseitig mit einem Übertrager (UT/Uz) symmetrisch abgeschlossene und an eine Sende-/Empfangseinheit angeschaltete Signalleitung (EZ, EF), wobei innerhalb eines, eine fest vorgegebene Anzahl von Binärzeichen aufweisenden Datenblockes eine bitweise Verschachtelung der den beiden Richtungen zugeordneten Datensignale vorgenommen wird, insbesondere für kleine Nebenstellenanlagen, in denen jeweils zwischen den Teilnehmerendgeräten (T1 ... Tn) und einer zentralen Einrichtung (ZE) unter anderem zur Übermittlung der dem Verbindungsaufbau dienenden und vom Teilnehmer eingegebenen Wahlinformationen bzw. Informationen über Leitungsbelegungen und zur Übermittlung von am Teilnehmerendgerät optisch und/oder akustisch durch entsprechend gesteuerte Anzeigeelemente (A) registrierbare, bestimmte Zustände der Gesprächsverbindung und die Anlage betreffende Informationen eine Signalübertragung über eine hierfür vorgesehene und aus den jeweiligen Sprechadern (a, b) und den Signaladern (c, d) gebildete Anschlußleitung stattfindet, wobei in der einen Übertragungsrichtung zur Kennzeichnung der beiden Binärwerte Impulse gleicher Polarität angewendet werden, dadurch gekennzeichnet, daß die Impulse sich sowohl in ihrer Zeitdauer als auch in ihrer Impulsamplitude in der Weise unterscheiden, daß der Impuls mit der geringeren Zeitdauer eine höhere Amplitude als der Impuls mit der längeren Zeitdauer aufweist, wobei das Produkt aus Impulsdauer (T/2, T) und der betreffenden Amplitude für beide Impulsarten annähernd den gleichen Wert aufweist, daß weiterhin zumindest die zwischen den Impulsanfängen vorgegebene Zeitdauer (BZ) als Pausenzeit zwischen den Datenblöcken festgelegt ist, daß in der anderen Übertragungsrichtung zur Darstellung der Binärwerte Impulse mit einer solchen Form und Amplitude gewählt sind, daß bei ihrem Einfügen die durch das Ausschwingverhalten der Leitung bestimmten Potentialverhältnisse etwa denjenigen entsprechen, die sich bei zwei unbeeinflußt aufeinanderfolgenden Impulsen der erstgenannten Art einstellen.

2. Verfahren nach Anspruch 1, dadurch gekennzeichnet, daß in der genannten anderen Übertragungsrichtung als Binärzeichen zur Darstellung des einen Binärwertes ein bipolarer Impuls (Z1) geeigneter Abmessung und für die Darstellung des anderen Binärwertes ein dem Ruhepotential entsprechender impulsloser Zustand (Z0) verwendet wird.

3. Verfahren nach Anspruch 1, dadurch gekennzeichnet, daß in den Fällen, in denen in der einen Richtung ein wesentlich höherer Informationsfluß als in der dazu entgegengesetzten Richtung gegeben ist, für diese Richtung als Binärzeichen die aktiven Impulse gleicher Polarität herangezogen werden.

4. Verfahren nach einem der vorhergehenden Ansprüche, dadurch gekennzeichnet, daß die Informationen für die einzelnen Teilnehmerendgeräte (T1—Tn) parallel zueinander ausgesendet und empfangen werden.

**Claims**

1. A method for the two-way transmission of binary data signals via a signal line (EZ, EF) which is symmetrically terminated at both sides by a transformer (UT/Uz) and which is connected to a transmitting-receiving unit, wherein a bit-wise interlacing of the data signals assigned to the two directions is carried out within a data block which includes a predetermined number of binary characters, in particular for small PBX exchanges, in each of which, between the subscriber terminals (T1 ... Tn) and a central device (ZE), for example for the transmission of the items of dialled information which serve for connection establishment purposes and are input by the subscriber, and items of information relating to line seizures, and for the transmission of items of information which can be optically and/or acoustically recorded at the subscriber terminal device by appropriately controlled display elements (A) and which relate to specific states of the conversation connection and the exchange, a signal transmission takes place via a connection line which is provided for this purpose and comprises the relevant speech wires (a, b) and the signal wires (c, d), where pulses of the same polarity are used in the one direction of transmission in order to characterise the two binary values, characterised in that the pulses differ both in their duration and in their pulse amplitude in that the pulse having the shorter duration has a higher amplitude than the pulse having the longer duration, where the product of pulse duration (T/2, T) and the relevant amplitude has approximately the same value for both pulse types, that moreover at least that length of time (BZ) which is provided between the pulse starts is specified as pause interval between the data blocks, that in the other direction of transmission, for the representation of the binary values, pulses are selected which have a form and amplitude which is such that when they are inserted the potential conditions which are governed by the decay characteristics of the line correspond approximately to those which occur in the case of two pulses of the firstmentioned type which follow one another uninfluenced.

2. A method as claimed in claim 1, characterised in that in the aforementioned other direction of transmission, a bipolar pulse (Z1) of suitable dimensions is used as binary character for the representation of the one binary value, and a pulse-free state (Z0) corresponding to the rest potential is used to represent the other binary value.

3. A method as claimed in claim 1, characterised in that in those situations in which a considerably higher information flow exists in the one direction than in the opposite direction, the active pulses of the same polarity are used as binary characters for this direction.

4. A method as claimed in one of the preceding claims, characterised in that the items of information for the individual subscriber terminals (T1 — tn) are transmitted and received in parallel with one another.

## Revendications

1. Procédé pour la transmission à l'alternat de signaux de données binaires par l'intermédiaire d'une ligne de signaux fermée symétriquement, des deux côtés, à l'aide d'un translateur et reliée à une unité mission/réception, du type dans lequel on procède à l'intérieur d'un bloc de données comportant un nombre prédéterminé d'éléments binaires, à un entrelacement bit à bit des signaux de données associés aux deux directions, en particulier pour des petites installations à postes supplémentaires, dans lesquelles a lieu, entre les terminaux des données et une installation centrale, entre autre, pour la transmission d'informations de sélection introduites par l'abonné, et servant à l'établissement de la liaison, ou d'informations relatives aux occupations de la ligne, et pour la transmission d'informations qui sont susceptibles d'être enregistrées au terminal de l'abonné par voie optique et/ou acoustique et par des éléments d'affichage commandés de façon correspondante, et qui concernent certains états de la liaison de la communication et l'installation, une transmission de signaux par l'intermédiaire d'une ligne d'abonné prévue à cet effet et constituée par les fils de conversations concernées et par les fils de signaux, des impulsions de même polarité étant utilisées dans une première direction de la transmission en vue de caractériser les deux valeurs binaires, remarquable par le fait que les impulsions se distinguet de telle manière entre elles, tant du point de leur durée que du point de vue de leur amplitude, que l'impulsion ayant la durée la plus courte possède une amplitude plus grande que l'amplitude de l'impulsion de plus grande durée, le produit de la durée de l'impulsion (T/2, T) par l'amplitude concernée pour les deux genres d'impulsions possède à peu près la même valeur, qu'en outre, au moins la durée prédéterminée entre les débuts des impulsions est fixée, en tant que durée de repos entre deux blocs de données, que dans l'autre direction de la transmission, on choisit pour la représentation des valeurs binaires des impulsions ayant une forme et une amplitude telles que lors de leur insertion, les rapports de potentiels qui sont déterminés par le comportement à l'évanouissement des lignes, correspondent à peu près à ceux qui s'établissent pour deux impulsions dudit premier genre, qui se suivent sans être influencées.

2. Procédé selon la revendications 1, caractérisé par le fait que dans ladite première direction de transmission on utilise, pour représenter la première valeur binaire, une impulsion bipolaire (Z1) de dimension appropriée, alors que pour représenter la seconde valeur binaire, on utilise un état (Z0) dépourvu d'impulsion et correspondant au potentiel de repos.

3. Procédé selon la revendication 1, caractérisé par le fait que dans les cas dans lesquels dans la première direction le flux d'informations est notablement plus élevé que dans la direction qui lui est opposée, on met en oeuvre, pour cette direction et en tant qu'éléments binaires, les impulsions actives de même polarité.

4. Procédé selon l'une des revendications précédentes, caractérisé par le fait que les informations pour les différents terminaux d'abonés (T1 — Tn) sont émises et reçues parallèlement entre elles.

FIG 1

0 061 524

FIG 2